# EUROPÄISCHE PATENTSCHRIFT

(11) **EP 1 194 698 B1**
(45) Veröffentlichungstag und Bekanntmachung des Hinweises auf die Patenterteilung: **28.07.2004**
(21) Anmeldenummer: 00949189.5
(22) Anmeldetag: 17.06.2000
(51) Int. Cl.: F16B 13/06

(54) **KUNSTSTOFFDÜBEL**
PLASTIC DOWEL
CHEVILLE EN PLASTIQUE

(30) Priorität: 17.07.1999 DE 19933671
(43) Veröffentlichungstag der Anmeldung: 10.04.2002
(73) Patentinhaber: fischerwerke Artur Fischer GmbH & Co. KG, 72178 Waldachtal (DE)
(72) Erfinder: BERG, Ralph, D-79112 Freiburg (DE); HEIN, Bernd, D-72270 Schönmünzach (DE); NEHL, Wolfgang, D-72178 Waldachtal (DE)
(86) Internationale Anmeldenummer: PCT/EP2000/005603
(87) Internationale Veröffentlichungsnummer: WO 2001/006138

(56) Entgegenhaltungen:
- DE-A- 2 748 881
- DE-A- 4 112 618
- DE-C- 280 066
- DE-U- 29 704 666

## Beschreibung

Die Erfindung betrifft einen Kunststoffdübel zur Verankerung in Bohrlöchern in Platten und in Hohlbaustoffen einerseits und zur Verankerung in Bohrlöchern in Vollbaustoffen andererseits mit den Merkmalen des Oberbegriffs des Anspruchs 1.

Derartige Kunststoffdübel sind an sich bekannt und werden beispielsweise von der Anmelderin unter der Bezeichnung fischer Universaldübel FU und fischer Allrounddübel UV vertrieben. Die bekannten Kunststoffdübel weisen einen hülsenförmigen Einschraubbereich in ihrem vorderen Teil und einen Hohlschaft in ihrem hinteren Bereich auf, zwischen denen sich ein Spreizbereich befindet, der sich über einen mittleren Bereich des Kunststoffdübels erstreckt. Im Spreizbereich weist der Kunststoffdübel Längsschlitze auf, durch die er in zwei oder mehr Spreizzungen unterteilt ist, die an ihrem vorderen Ende über den Einschraubbereich und an ihrem hinteren Ende über den Hohlschaft miteinander verbunden sind. Zur Verankerung wird der Kunststoffdübel in ein Bohrloch gesteckt und es wird eine Spreizschraube in den Kunststoffdübel eingeschraubt. In einem Bohrloch in Vollbaustoff "verdrängt" oder drückt die Spreizschraube die Spreizzungen nach außen, der Kunststoffdübel wird im Spreizbereich von der Spreizschraube aufgeweitet, die Spreizzungen werden gegen eine Bohrlochwandung gedrückt, wodurch der Kunststoffdübel im Bohrloch im Vollbaustoff verankert ist. Bei einer Platte oder in einem Hohlbaustoff wird der Kunststoffdübel durch ein Bohrloch gesteckt und steht mit seinem Spreizbereich an einer Rückseite der Platte vor bzw. der Spreizbereich befindet sich in einem Hohlraum des Hohlbaustoffs. Die Spreizschraube wird durch den Hohlschaft und den Spreizbereich in den Kunststoffdübel eingebracht und in den hülsenförmigen Einschraubbereich des Kunststoffdübels eingeschraubt. Durch das Einschrauben der Spreizschraube wird der Einschraubbereich des Kunststoffdübels in Richtung des Hohlschafts verschoben, wobei der Spreizbereich axial gestaucht wird. Beim axialen Stauchen stellt sich der Spreizbereich zur Seite aus. Eine Möglichkeit des Ausstellens zur Seite ist ein Ausknicken der Spreizzungen, die Spreizzungen knicken etwa in ihrer Längsmitte nach außen, sie bilden eine Art Kniegelenk, das durch das Stauchen aus einer gestreckten in eine abgewinkelte (ausgeknickte ) Stellung verbracht wird. Durch das Ausknicken hintergreifen die Spreizzungen die Platte bzw. einen Steg oder dgl. des Hohlbaustoffs, der Kunststoffdübel ist durch Formschluß an der Platte bzw. im Hohlbaustoff verankert. Eine weitere Möglichkeit des Ausstellens des Spreizbereichs zur Seite ist beim Fischer Allrounddübel UV verwirklicht. Bei diesem findet mit dem axialen Stauchen des Spreizbereichs zugleich eine Torsion des Spreizbereichs statt, der Einschraubbereich verdreht sich beim Einschrauben der Spreizschraube gegenüber dem Hohlschaft des Kunststoffdübels, die Spreizzungen werden verwunden und der Spreizbereich wird zu einer Art Knoten oder einem Knäuel geformt. Der Knoten bzw. das Knauel hintergreift die Platte bzw. den Steg des Hohlbaustoffs und der Kunststoffdübel ist durch Formschluß an der Platte bzw. im Hohlbaustoff verankert.

Zum Ausknicken oder zur Knotenbildung der Spreizzungen ist eine hohe axiale Stauchkraft im Spreizbereich des Kunststoffdübels erforderlich, die, insbesondere bei Verwendung einer Spreizschraube kleinen Durchmessers zum Ausreißen der Spreizschraube aus dem Einschraubbereich führen kann. Der Kunststoffdübel wird dadurch im Spreizbereich nicht ausgeknickt, bzw. es wird kein Knoten gebildet, d.h. der Spreizbereich wird nicht zur Seite ausgestellt und der Kunststoffdübel nicht oder allenfalls schlecht an der Platte bzw. im Hohlbaustoff verankert. Zur Vermeidung des Ausreißens ist in der DE 297 04 666 eine Metallkappe mit einem Schraubengewinde auf ein vorderes Ende, also auf den Einschraubbereich eines Kunststoffdübels aufgesetzt worden. Diese Metallkappe hat allerdings den Nachteil, dass sie einen Durchmesser-bereich der Spreizschraube einengt, es ist allenfalls eine geringe Durchmessertoleranz der Spreizschraube möglich.

Der Erfindung liegt die Aufgabe zugrunde, einen Kunststoffdübel der vorstehend erläuterten Art derart auszubilden, daß ein Ausreißen der Spreizschraube vermieden und ein verhältnismäßig großer Durchmessertoleranzbereich der Spreizschraube möglich ist.

Diese Aufgabe wird erfindungsgemäß durch die Merkmale des Anspruchs 1 gelöst. Der erfindungsgemäße Kunststoffdübel weist ein Einschraubelement auf, welches aus einem festeren Werkstoff als der Kunststoffdübel besteht. Das Einschraubelement besteht insbesondere aus Metall. Mit festerem Werkstoff ist ein Werkstoff gemeint, der beim Einschrauben der Spreizschraube der beim axialen Stauchen und seitlichen Ausstellen des Spreizbereichs des Kunststoffdübels auftretenden Belastung standhält und ein Ausreißen der Spreizschraube aus dem Einschraubelement verhindert. Erfindungsgemäß ist das Einschraubelement als plattenförmiges Teil ausgebildet und schwenkbar vor dem Spreizbereich des Kunststoffdübels angeordnet. Durch die Schwenkbarkeit passt sich das plattenförmige Teil durch mehr oder weniger starke Schrägstellung an den Durchmesser der jeweils verwendeten Spreizschraube selbsttätig an. Durch Einschrauben der Spreizschraube in das plattenförmige Teil des Einschraubelements und Anziehen der Spreizschraube wird das plattenformige Teil schräg gestellt, wodurch sich ein lichter Durchtrittsquerschnitt verkleinert. Die Schrägstellung des Einschraubelements ist bei einer Spreizschraube mit kleinem Durchmesser größer, bei einer Spreizschraube mit großem Durchmesser kleiner. Die Schrägstellung bewirkt einen sicheren Eingriff der Spreizschraube am plattenförmigen Teil des Einschraubelements. Der erfindungsgemäße Kunststoffdübel hat den Vorteil, dass sich durch die Schwenkbarkeit des plattenförmigen Teils seines Einschraubelements und die damit verbundene, vom Durchmesser der jeweils verwendeten Spreizschraube abhängige Schrägstellung des plattenförmigen Teils das Einschraubelement selbsttätig an den Durchmesser der Spreizschraube anpasst, wodurch die Durchmessertoleranz der verwendbaren Spreizschrauben groß ist. Die Schwenkbarkeit des plattenförmigen Teils stellt einen sicheren Eingriff auch einer Spreizschraube mit kleinem Durchmesser sicher. Weiterer Vorteil des erfindungsgemäßen Kunststoffdübels ist, dass ein zum Einschrauben der Spreizschraube notwendiges Einschraubmoment im Einschraubelement geringer vom Durchmesser der Spreizschraube abhängig ist als in einem hülsenförmigen Einschraubbereich aus Kunststoff, d.h. das Einschraubmoment ist weniger stark vom Durchmesser der jeweils verwendeten Spreizschraube abhängig.

In bevorzugter Ausgestaltung der Erfindung ist das plattenförmige Teil des Einschraubelements schräg zu einer Radialebene des Kunststoffdübels am Kunststoffdübel angebracht. Das plattenförmige Teil wird beim Einschrauben einer Spreizschraube mit großem Durchmesser in Richtung der Radialebene verschwenkt, bis eine lichte Weite Quermesser des plattenförmigen Teils zum Durchtritt der Spreizschraube ausreicht. Beim Anziehen der Spreizschraube wird, auch bei einer Spreizschraube kleinen Durchmessers, das plattenförmige Teil so stark schräggestellt, dass die Spreizschraube sicher in Eingriff mit dem Einschraubelement steht und die zum axialen Stauchen des Spreizbereichs notwendige Axialkraft sicher von der Spreizschraube auf das Einschraubelement übertragen wird.

Bei einer Ausgestaltung der Erfindung ist das plattenförmige Teil des Einschraubelements federelastisch am Kunststoffdübel angebracht und dadurch federelastisch in seiner Schrägstellung gehalten. Eine Spreizschraube großen Durchmessers drückt beim Eindrehen das plattenförmige Teil gegen dessen Federelastizität in Richtung der Radialebene und das plattenförmige Teil wird federelastisch in Eingriff mit der Spreizschraube gedrückt.

Bei einer Ausgestaltung der Erfindung ist das plattenförmige Teil des Einschraubelemenfs als Lochscheibe ausgebildet, wobei die Lochscheibe vorzugsweise ein unrundes Loch aufweist. Das Loch kann beispielsweise oval, elyptisch oder rautenförmig sein. Durch unterschiedlich starke Schrägstellung der Lochscheibe verändert sich eine lichte Weite des Lochs der Lochscheibe, wodurch sich die Lochscheibe an den Durchmesser der jeweils verwendeten Spreizschraube anpasst. Auch kann das Loch des eine Lochscheibe aufweisenden Einschraubelements einen Gewindegang aufweisen, wie er von Gewindeblechen her bekannt ist.

Vorzugsweise ist das Einschraubelement mit Abstand vor einem vorderen Stirnende des Kunststoffdübels angeordnet, wobei das vordere Ende des Kunststoffdübels eine Anlage für das Einschraubelement beim Anziehen der Spreizschraube bildet.

Die Erfindung wird nachfolgend anhand zweier in der Zeichnung dargestellter Ausführungsbeispiele näher erläutert. Es zeigen:
- Figur 1: einen erfindungsgemäßen Kunststoffdübel in perspektivischer Darstellung;
- Figur 2: den Kunststoffdübel aus Figur 1 in Seitenansicht;
- Figur 3: einen Achsschnitt durch den Kunststoffdübel aus Figur 1;
- Figur 4: den Kunststoffdübel aus Figur 1 in Seitenansicht in einer Figur 2 entgegengesetzten Blickrichtung;
- Figur 5: die Verankerung des Kunststoffdübels aus Figur 1 an einer Platte; und
- Figur 6: die Verankerung des Kunststoffdübels aus Figur 1 in einem Vollbaustoff.

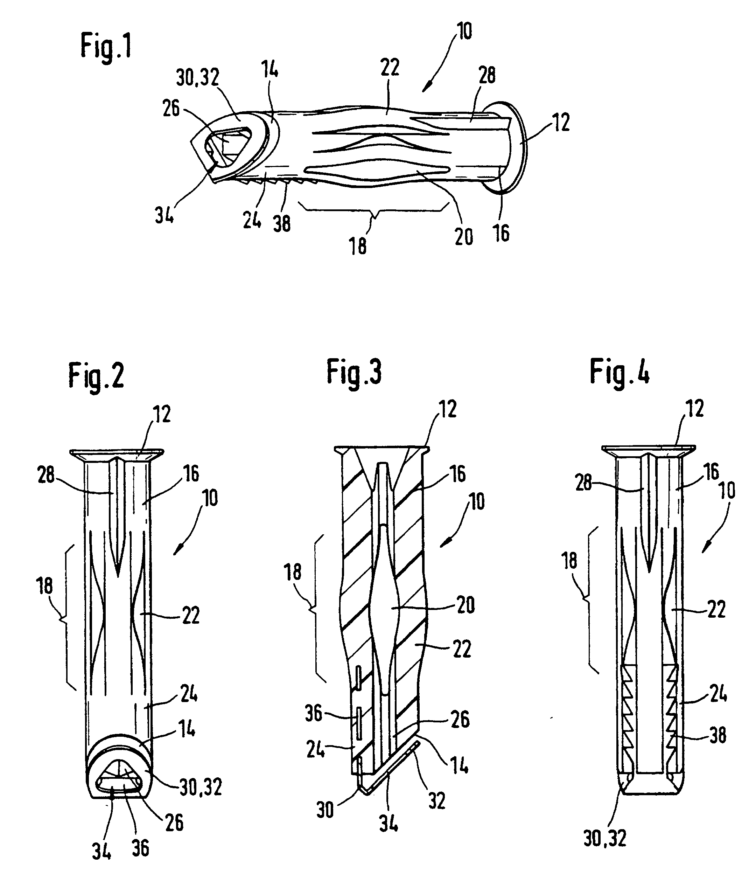

Der in Figuren 1 bis 3 dargestellte, insgesamt mit 10 bezeichnete, erfindungsgemäße Kunststoffdübel ist im wesentlichen hülsenförmig ausgebildet. Er weist an seinem hinteren Ende einen Radialbund 12 auf, sein vorderes Ende ist als Schrägfläche 14 mit einem Winkel von etwa 45° ausgebildet. In einem hinteren Bereich, der ungefähr ein Viertel der Länge des Kunststoffdübels 10 einnimmt, weist der Kunststoffdübel 10 einen zylindrischen Hohlschaft 16 auf. Ein Mittelbereich des Kunststoffdübels 10 ist als Spreizbereich 18 ausgebildet. Der Spreizbereich 18 nimmt ungefähr die Hälfte der Länge des Kunststoffdübels 10 ein. Im Spreizbereich 18 sind durch Längsschlitze 20 zwei Spreizzungen 22 einander gegenüberliegend ausgebildet, die etwas nach außen gewölbt sind. In einem vorderen Bereich, der wiederum ungefähr ein Viertel der Länge des Kunststoffdübels 10 einnimmt, weist der Spreizdübel 10 einen hülsenförmigen Einschraubbereich 24 auf. Der Einschraubbereich 24 weist ein im Querschnitt rautenförmiges Einschraubloch 26 (Figur 3) auf, in das eine nicht dargestellte Holzschraube als Spreizschraube einschraubbar ist, die sich ihr Gewinde selbst in den Einschraubbereich 24 des Kunststoffdübels 10 schneidet.

Vom Hohlschaft 16 stehen Längsrippen 28 als Drehsperren nach außen ab. Die bislang aufgeführten Elemente des Kunststoffdübels 10, also der Radialflansch 12, der Hohlschaft 16 mit den Längsnppen 28, die Spreizzungen 22 und der Einschraubbereich 24 sind einstückig miteinander durch Spritzgießen aus Kunststoff hergestellt.

Am vorderen Ende des Spreizdübels 10 ist ein Einschraubelement 30 angeordnet. Das Einschraubelement 30 weist ein plattenförmiges Teil in Form einer Lochscheibe 32 mit einem dreiecksförmigen, gerundete Ecken aufweisenden Loch 34 auf. Die Lochscheibe 32 ist mit etwas Abstand vor und parallel zur Schrägfläche 14 am vorderen Ende des Kunststoffdübels 10 angeordnet. Die Lochscheibe 32 ist einstückig mit einer Befestigungszunge 36, die an einer Stelle des Umfangs der Lochscheibe 32 angeordnet und um einen Winkel von ca. 135° zur Lochscheibe 32 umgebogen ist. Dieser Biegewinkel ergibt die Schrägstellung der Lochscheibe 32 von ca. 45° in Bezug zu einer Längsachse bzw. zu einer Radialebene des Kunststoffdübels 10. Die Lochscheibe 32 und die Befestigungszunge 36, die gemeinsam das Einschraubelement 30 bilden, sind einstückig durch Stanzen und Biegen aus einem Metallblech hergestellt. Im Bereich einer Biegestelle zwischen der Lochscheibe 32 und der Befestigungszunge 36 ist die Lochscheibe 32 schwenkbar gegenüber der Befestigungszunge 36 und damit gegenüber dem Kunststoffdübel 10, d.h. die Schrägstellung der Lochscheibe 32 des Einschraubelements 30 ist veränderlich. Durch die Federelastizität des Metallblechs, aus dem das Einschraubelement 30 hergestellt ist, ist dessen Lochscheibe 32 federelastisch am Kunststoffdübel 10 angebracht.

Die Befestigungszunge 36 verläuft achsparallel außerhalb des Einschraublochs 26 im hülsenförmigen Einschraubbereich 24 des Kunststoffdübels 10, die Befestigungszunge 36 ist mit dem den Einschraubbereich 24 bildenden Kunststoff umspritzt und auf diese Weise im Kunststoffdübel 10 befestigt. Die Befestigungszunge 36 weist eine sägezahnförmige Verzahnung 38 an ihren Längsrändern auf, wobei die Verzahnung 38 aus dem hülsenförmigen Einschraubbereich 24 des Kunststoffdübels 10 vorsteht und eine Drehsicherung und Verankerung durch Verzahnung in einem Bohrloch bildet.

Die Verankerung des erfindungsgemäßen Kunststoffdübels 10 an einer Platte 40 wird nachfolgend anhand Figur 4 erläutert: Der Kunststoffdübel 10 wird durch ein in der Platte 40 angebrachtes Bohrloch 42 durchgesteckt, d.h. der Hohlschaft 16, der den hinteren Bereich des Kunststoffdübels 10 bildet, befindet sich im Bohrloch 42 und der Spreizbereich 18 ist zumindest über einen Großteil seiner Länge durch das Bohrloch 42 durchgesteckt, er befindet sich auf einer Rückseite der Platte 40. Mit Rückseite ist eine einem zu befestigenden Gegenstand 44 abgewandte Seite der Platte 40 gemeint. Der mit einem Durchgangsloch 46 versehene Gegenstand 44 wird mit seinem Durchgangsloch 46 mit dem Kunststoffdübel 16 fluchtend auf die Platte 40 aufgesetzt und es wird eine Spreizschraube 48 (Holzschraube) durch das Durchgangsloch 46 im zu befestigenden Gegenstand 44 durchgesteckt und in den Hohlschaft 16 des Kunststoffdübels 10 eingeführt. Die Spreizschraube 48 wird durch den Spreizbereich 18 durch - und in den hülsenförmigen Einschraubbereich 24 im vorderen Bereich des Kunststoffdübels 10 eingeschraubt. Die Spreizschraube 48 tritt aus dem vorderen Ende des Einschraubbereichs 24 aus und wird in die Lochscheibe 32 des Einschraubelements 30 ein- bzw. durch die Lochscheibe 32 des Einschraubelements 30 durchgeschraubt. Beim Einschrauben der Spreizschraube 48 in den Einschraubbereich 24 schneidet sich die Spreizschraube 48 ihr Gewinde selbst. Eine im Durchmesser große Spreizschraube 48 liegt mit ihrem Gewindekern an einander gegenüberliegenden Stellen des Lochs 34 der Lochscheibe 32 an und drückt diese aufgrund ihrer federelastischen und schwenkbaren Anbringung am Kunststoffdübel 10 in Richtung einer Radialebene. Die Schrägstellung der Lochscheibe 32 verringert sich dadurch, wobei sich eine lichte Weite des Lochs 34 in axialer Richtung des Kunststoffdübels 10 gesehen vergrößert. Die Schrägstellung der Lochscheibe 32 wird von der Spreizschraube 48 soweit verringert, dass die Lochscheibe 32 an zwei oder aufgrund der Dreiecksform des Lochs 34 auch an drei Stellen über den Umfang verteilt an der Spreizschraube 48 anliegt. Aufgrund ihrer federelastischen Anbringung am Kunststoffdübel 10 wird die Lochscheibe 32 in diese Anlage am Gewinde der Spreizschraube 48 gedrückt und dadurch in Eingriff mit der Spreizschraube 48 gehalten. Aufgrund ihrer Schwenkbarkeit passt sich die Lochscheibe 32 und damit das Einschraubelement 30 des Kunststoffdübels 10 an Spreizschrauben 48 unterschiedlichen Durchmessers an.

Anschließend wird die Spreizschraube 48 angezogen und dabei ihr Spreizbereich 18 gestaucht. Durch das Stauchen werden die Spreizzungen 22 begünstigt durch ihre Wölbung nach außen zur Seite ausgestellt, sie knicken zur Seite aus. Der Einschraubbereich 24 des Kunststoffdübels 10 wird beim Stauchen des Spreizbereichs 18 in Richtung des Hohlschafts 16 gezogen. Zu Beginn des Stauchens des Spreizbereichs 18 und des Ausstellens/Ausknickens der Spreizzungen 22 zur Seite ist eine notwendige, von der Spreizschraube 48 auf den Einschraubbereich 24 ausgeübte Axialkraft hoch. Sind die Spreizzungen 22 etwas ausgeknickt, sind sie in axialer Richtung weniger steif und die erforderliche Stauchkraft verringert sich. Das Einschraubelement 30 mit der Lochscheibe 32, mit der die Spreizschraube 48 in Eingriff steht, verhindert, dass insbesondere zu Beginn des Stauchens des Spreizbereichs 18 und des Ausstellens/Ausknickens der Spreizzungen 22 zur Seite die Spreizschraube 48, insbesondere wenn sie einen kleinen Durchmesser aufweist, aus dem Einschraubbereich 24 des Kunststoffdübels 10 ausgerissen wird. Das Einschraubelement 30 mit der Lochscheibe 32 stellt den axialen Eingriff der Spreizschraube 48 mit dem Einschraubbereich 24 bzw. mit der Lochscheibe 32 und damit die vorgesehene Ausstellung/Ausknickung der Spreizzungen 22 zur Seite sicher. Durch'das Anziehen der Spreizschraube 48 kann die Lochscheibe 32 gegen die Schrägfläche 14 am vorderen Ende des Kunststoffdübels 10 gezogen werden, die Schrägfläche 14 bildet eine Anlage für die Lochscheibe 32. Die zur Seite ausgestellten Spreizzungen 22 hintergreifen die Platte 40 und verankern dadurch den Kunststoffdübel 10 durch Formschluß an der Platte 40.

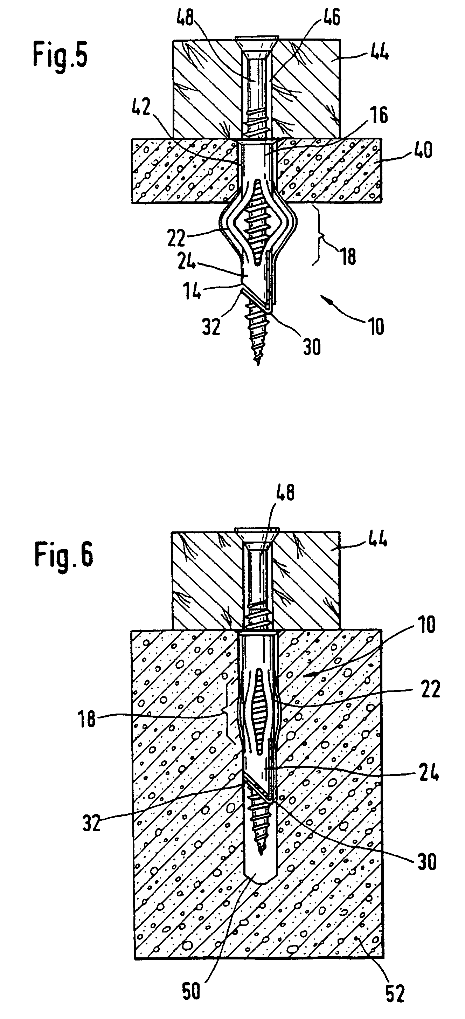

Die Verankerung des Kunststoffdübels 10 in einem Bohrloch 50 in einem Vollbaustoff 52 ist Figur 5 dargestellt. Hier ist die Spreizschraube 48 in den Kunststoffdübel 10, der in das Bohrloch 50 eingesetzt ist, eingeschraubt. Die Spreizschraube 48 "verdrängt" die Spreizzungen 22, sie drückt die Spreizzungen 22 nach außen und weitet dadurch den Spreizbereich 18 des Kunststoffdübels 10 auf. Die Spreizzungen 22 werden von der Spreizzunge 48 gegen eine Bohrlochwandung gepreßt und der Kunststoffdübel 10 ist dadurch im Bohrloch 50 im Vollbaustoff 52 verankert. Bei der Verankerung des Kunststoffdübels 10 in einem Vollbaustoff 52 ist die von der Spreizschraube 48 auf den Einschraubbereich 24 des Kunststoffdübels 10 ausgeübte Axialkraft üblicherweise geringer als bei der Verankerung an einer Platte. Deswegen ist die Gefahr des Ausreißens der Spreizschraube 48 aus dem Einschraubbereich 24 geringer. Sofern die Axialkraft der Spreizschraube 48 so groß bzw. ihr Durchmesser so klein ist, daß sich die Spreizschraube 48 axial gegenüber dem Einschraubbereich 24 bewegt, verändert auch hier das Einschraubelement 30 mit der Lochscheibe 32 ein Ausreißen der Spreizschraube aus dem Einschraubbereich 24 des Kunststoffdübels 10 und bewirkt eine sichere Verankerung des Kunststoffdübels 10 im Bohrloch und einen festen Halt des Gegenstands 44 am Vollbaustoff 52.

## Patentansprüche

1. Kunststoffdübel zur Verankerung in Bohrlöchern in Platten und in Hohlbaustoffen einerseits und zur Verankerung in Bohrlöchern in Vollbaustoffen andererseits, mit einem Spreizbereich, der durch Eindrehen einer Spreizschraube in den Kunststoffdübel zur Verankerung in einem Bohrloch in einem Vollbaustoff aufweitbar ist und der durch axiales Stauchen des Spreizbereichs durch Eindrehen der Spreizschraube in den Kunststoffdübel zur Verankerung in einem Bohrloch in einer Platte oder in einem Hohlbaustoff zur Seite ausstellbar ist, so dass der zur Seite ausgestellte Spreizbereich die Platte oder den Hohlbaustoff hintergreift, und mit einem Einschraubelement aus einem festeren Werkstoff als der Kunststoffdübel, das vor dem Spreizbereich am Kunststoffdübel angeordnet ist und in das die Spreizschraube einschraubbar ist, **dadurch gekennzeichnet, dass** das Einschraubelement (30) ein plattenförmiges Teil (32) aufweist, das schwenkbar vor dem Spreizbereich (18) des Kunststoffdübels (10) angeordnet ist.

2. Kunststoffdübel nach Anspruch 1, **dadurch gekennzeichnet, dass** das Einschraubelement (30) ein Metallteil ist.

3. Kunststoffdübel nach Anspruch 1, **dadurch gekennzeichnet, dass** das plattenförmige Teil (32) des Einschraubelements (30) schräg zu einer Radialebene des Kunststoffdübels (10) am Kunststoffdübel (10) angebracht ist.

4. Kunststoffdübel nach Anspruch 1, **dadurch gekennzeichnet, dass** das plattenförmige Teil (32) des Einschraubelements (30) federelastisch am Kunststoffdübel (10) angebracht ist.

5. Kunststoffdübel nach Anspruch 1, **dadurch gekennzeichnet, dass** das Einschraubelement (30) eine Lochscheibe (32) aufweist.

6. Kunststoffdübel nach Anspruch 5, **dadurch gekennzeichnet, dass** die Lochscheibe (32) ein unrundes Loch (34) aufweist.

7. Kunststoffdübel nach Anspruch 1, **dadurch gekennzeichnet, dass** ein vorderes Ende des Kunststoffdübels (10) eine Anlage (14) für das plattenförmige Teil (32) des Einschraubelements (30) aufweist und das plattenförmige Teil (32) des Einschraubelements (30) mit Abstand vor dem vorderen Ende des Kunststoffdübels (10) angeordnet ist.

## Claims

1. Plastics fixing plug for anchoring in holes drilled in panels and in hollow building materials on the one hand and for anchoring in holes drilled in solid building materials on the other hand, having an expansion zone which can be expanded by screwing an expander screw into the plastics fixing plug for anchoring in a hole drilled in a solid building material and which can be displaced sideways by axial compression of the expansion zone caused by screwing the expander screw into the plastics fixing plug for anchoring in a hole drilled in a panel or in a hollow building material so that the expansion zone that has been displaced sideways engages behind the panel or the hollow building material, and having a screw-receiving element of a firmer material than the plastics fixing plug, which is arranged on the plastics fixing plug in front of the expansion zone and into which the expander screw can be screwed, **characterized in that** the screw-receiving element (30) has a plate-shaped component (32) which is pivotally arranged in front of the expansion zone (18) of the plastics fixing plug (10).

2. Plastics fixing plug according to claim 1, **characterized in that** the screw-receiving element (30) is a metal component.

3. Plastics fixing plug according to claim 1, **characterized in that** the plate-shaped component (32) of the screw-receiving element (30) is mounted on the plastics fixing plug (10) obliquely relative to a radial plane of the plastics fixing plug (10).

4. Plastics fixing plug according to claim 1, **characterized in that** the plate-shaped component (32) of the screw-receiving element (30) is mounted resiliently on the plastics fixing plug (10).

5. Plastics fixing plug according to claim 1, **characterized in that** the screw-receiving element (30) has an apertured disc (32).

6. Plastics fixing plug according to claim 5, **characterized in that** the apertured disc (32) has a non-circular hole (34).

7. Plastics fixing plug according to claim 1, **characterized in that** the forward end of the plastics fixing plug (10) has an engagement surface (14) for the plate-shaped component (32) of the screw-receiving element (30), and the plate-shaped component (32) of the screw-receiving element (30) is arranged in front of, and spaced apart from, the forward end of the plastics fixing plug (10).

## Revendications

1. Goujon en matière plastique destiné à l'ancrage dans des forures dans des plaques et dans des matériaux de construction creux, d'une part, et à l'ancrage dans des forures dans des matériaux de construction pleins, d'autre part, avec une zone d'expansion qui peut être élargie par la pose d'une vis d'expansion dans le goujon en matière plastique en vue de l'ancrage dans une forure dans un matériau de construction plein et qui peut être exposée latéralement par compression axiale de la zone d'expansion par la pose de la vis d'expansion dans le goujon en matière plastique en vue de l'ancrage dans une forure dans une plaque ou dans un matériau de construction creux, de manière à ce que la zone d'expansion exposée latéralement saisisse par l'arrière la plaque ou le matériau de construction creux, et avec un élément fileté en matériau plus solide que le goujon en matière plastique qui est disposé avant la zone d'expansion sur le goujon en matière plastique et dans lequel la vis d'expansion peut être vissée, **caractérisé en ce que** l'élément fileté (30) comporte une partie en forme de plaque (32) qui est disposée de manière orientable avant la zone d'expansion (18) du goujon en matière plastique (10).

2. Goujon en matière plastique selon la revendication 1, **caractérisé en ce que** l'élément fileté (30) est une pièce en métal.

3. Goujon en matière plastique selon la revendication 1, **caractérisé en ce que** la partie en forme de plaque (32) de l'élément fileté (30) est placée sur le goujon en matière plastique (10) en biais par rapport à un plan radial du goujon en matière plastique (10).

4. Goujon en matière plastique selon la revendication 1, **caractérisé en ce que** la partie en forme de plaque (32) de l'élément fileté (30) est placée sur le goujon en matière plastique (10) de manière élastique.

5. Goujon en matière plastique selon la revendication 1, **caractérisé en ce que** l'élément fileté (30) comporte une plaque perforée (32).

6. Goujon en matière plastique selon la revendication 5, **caractérisé en ce que** la plaque perforée (32) comporte une perforation ovalisée (34).

7. Goujon en matière plastique selon la revendication 1, **caractérisé en ce qu'**une extrémité antérieure du goujon en matière plastique (10) comporte un aménagement (14) pour la partie en forme de plaque (32) de l'élément fileté (30), et **en ce que** la partie en forme de plaque (32) de l'élément fileté (30) est disposée à une certaine distance avant l'extrémité antérieure du goujon en matière plastique (10).
